# EUROPEAN PATENT SPECIFICATION

(11) **EP 2 142 476 B1**
(45) Date of publication and mention of the grant of the patent: **24.08.2011**
(21) Application number: 08723988.5
(22) Date of filing: 17.03.2008
(51) Int. Cl.: C01B 33/033, C25C 7/00

(54) **A METHOD AND A REACTOR FOR PRODUCTION OF HIGH-PURITY SILICON**
VERFAHREN UND REAKTOR ZUR HERSTELLUNG VON HOCHREINEM SILICIUM
PROCÉDÉ ET RÉACTEUR DE FABRICATION DE SILICIUM HAUTE PURETÉ

(30) Priority: 02.04.2007 NO 20071763
(43) Date of publication of application: 13.01.2010
(73) Proprietor: Norsk Hydro ASA, 0240 Olso (NO)
(72) Inventor: ROSENKILDE, Christian, 3911 Porsgrunn (NO)
(74) Representative: Hofseth, Svein
(86) International application number: PCT/NO2008/000106
(87) International publication number: WO 2008/120995

(56) References cited:
- WO-A1-2006/100114
- JP-A- 11 092 130
- JP-A- 2000 226 683
- DATABASE WPI Thomson Scientific, London, GB; AN 2000-649287 XP002567461 & JP 2000 086225 A (NGK INASULATORS LTD) 28 March 2000 (2000-03-28)

## Description

The present invention relates to a method and equipment for the production of high purity silicon metal from reduction of silicon tetrachloride (SiCl₄) by zinc metal in the liquid state.

High purity silicon metal has many applications, of which semiconductor material for the electronic industry and photovoltaic cells for generation of electricity from light are the most important. Presently, high purity silicon is commercially produced by thermal decomposition of high purity gaseous silicon compounds. The most common processes use either SiHCl₃ or SiH₄. These gases are thermally decomposed on hot high purity Si substrates to silicon metal and gaseous by-products.

The present processes, in particular the thermal decomposition steps, are very energy intensive and industrial production plants are large and expensive. Any new process addressing these issues and at the same time being able to supply Si metal of sufficient purity is therefore highly desirable.

It has long been known that reduction of high purity SiCl₄ with high purity Zn metal has the potential to yield high purity Si metal. In 1949, D.W. Lyon, C.M. Olson and E.D. Lewis, all of DuPont, published an article in J. Electrochem.Soc. (1949, 96, p.359) describing the preparation of Hyper-Pure Silicon from Zn and SiCl₄. They reacted gaseous Zn with gaseous SiCl₄ at 950°C, and obtained high purity Si. Later researchers at the Batelle Columbus Laboratories conducted similar tests, but at a much larger scale. Gaseous SiCl₄ and gaseous Zn was fed to a fluidised bed reactor, where Si granules were formed (see e.g. D.A. Seifert and Mf. Browning, AIChE Symposium Series (1982), 78(216), p.104-115). Reduction of SiCl₄ in molten Zn has also been described in various patents. US 4,225,367 describes a process for production of thin films of silicon metal. A gaseous Si-containing species is led into a chamber containing a liquid Zn containing alloy. The gaseous Si-species is reduced on the surface of the alloy and deposits there as a thin Si-film. JP110092130, "Manufacture of high-purity silicon in closed cycle", describes a process for production of high purity silicon. Liquid or gaseous SiCl₄ is reduced with molten Zn to give polycrystalline Si and ZnCl₂. The ZnCl₂ is separated from the Si by distillation and fed to an electrolytic cell where Zn and Cl₂ are produced. The Zn is used for the reduction of SiCl₄ in a separate reactor, while the chlorine is treated with H to give HCl, which is used to chlorinate metallurgical grade Si. Both Zn and Cl are thus recycled in the process. The obtained Si had a quality suitable for use in solar cells. A similar process is described in WO 2006/100114. A difference between this and JP 1997-246853 is that the melting of the Si resulting from the reduction of SiCl₄ with Zn is to be melted, and thereby purified from Zn and ZnCl₂, in the same container as was used for the SiCl₄ reduction. A closed cycle as described in JP 110092130is not required.

In all of the above-described methods for production of high purity silicon by reduction of SiCl₄ with Zn the ZnCl₂ is leaving the reactor as a gas. The vapour pressure of Zn metal is also significant at the operating temperatures, and some Zn will therefore follow the ZnCl₂. Furthermore, since the reaction

SiCl₄ + 2Zn = Si + 2ZnCl₂

is not completely shifted to the right at temperatures above the boiling point of ZnCl₂, the off-gas from the reduction will also contain some SiCl₄. During cooling of the off-gas, SiCl₄ will react with Zn yielding Si and ZnCl₂. The prevailing equilibrium conditions in the reactor therefore yield a ZnCl₂ condensate containing both Zn and Si metal. This complicates the recycling of the ZnCl₂ by electrolysis. Furthermore, handling of both liquid and solid Zn and ZnCl₂ is required.

In view of the solutions known from the prior art, the present invention represents a novel and vast improvement of a method and equipment for the production of solar grade (high purity) silicon metal from reduction of silicon tetrachloride (SiCl₄) by zinc metal in liquid state, as the reduction reaction as shown above is completely shifted to the right and as the handling of Zn and ZnCl₂ is minimised. The method according to the invention is effective and the equipment is simple and cheap to build and operate.
The method according to the invention is characterized by the features as defined in the attached independent claim 1.
Further, the equipment according to the invention is characterized by the features as defined in the attached independent claim 11.
Claims 2 - 10 and 12 - 18 define advantageous embodiments of the invention.

In the following, the present invention shall be described by examples and figures where:
Fig. 1 shows the principal components of a reactor/electrolyser with three compartments according to the present invention shown in a cross sectional end view.
Fig. 2 shows the principal components of the reactor/electrolyser shown in Fig. 1, shown in a cross sectional top view,
Fig. 3 shows the principal components of the reactor/electrolyser shown in Fig. 1, shown in one cross sectional side view.
Fig. 4 shows the principal components of the reactor/electrolyser shown in Fig. 1, shown in another cross sectional side view.
Fig. 5 shows a simplified drawing of the material flow in the reactor/electrolyser

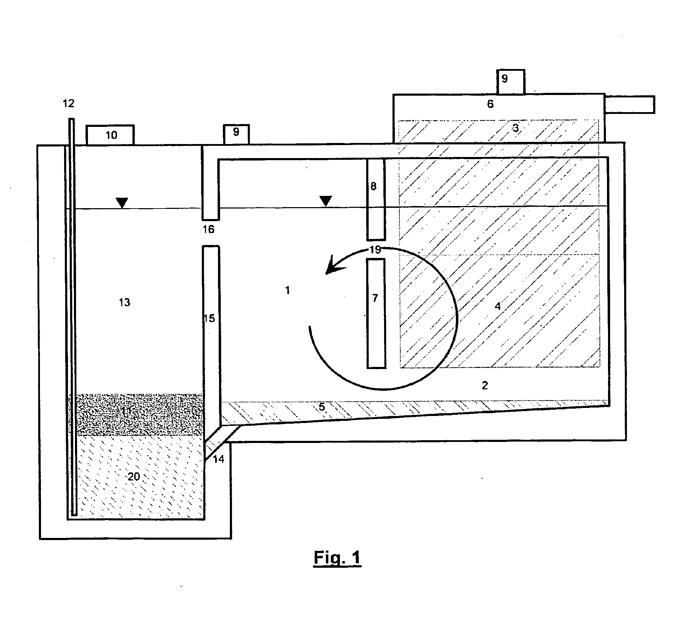

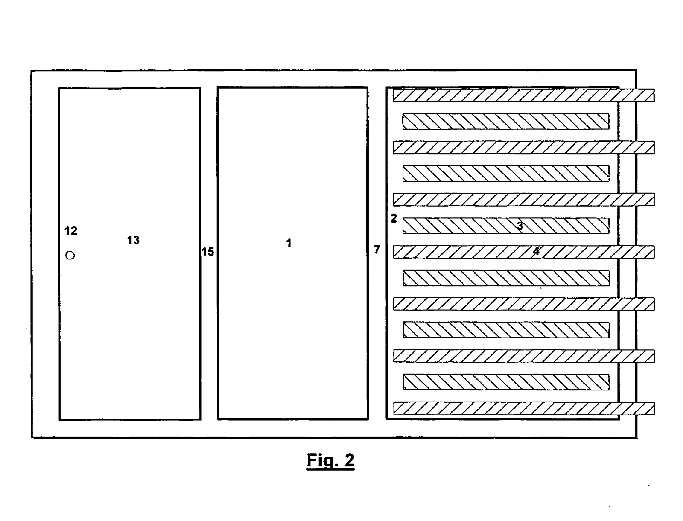

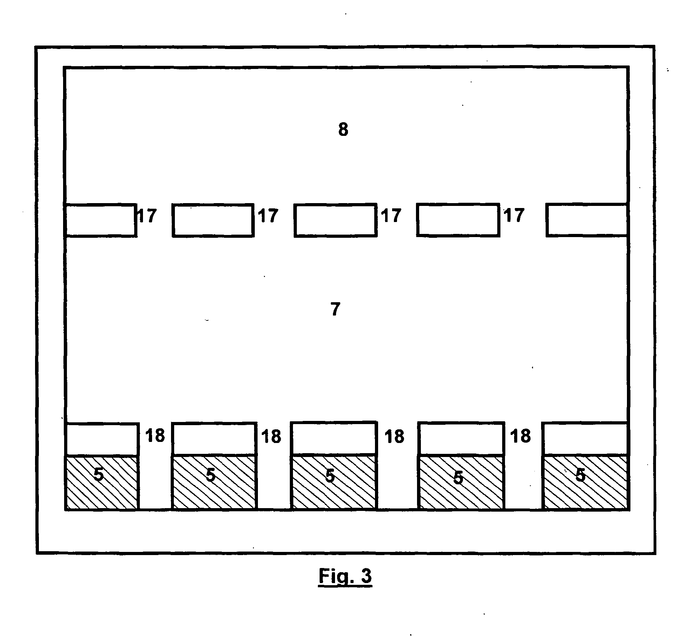

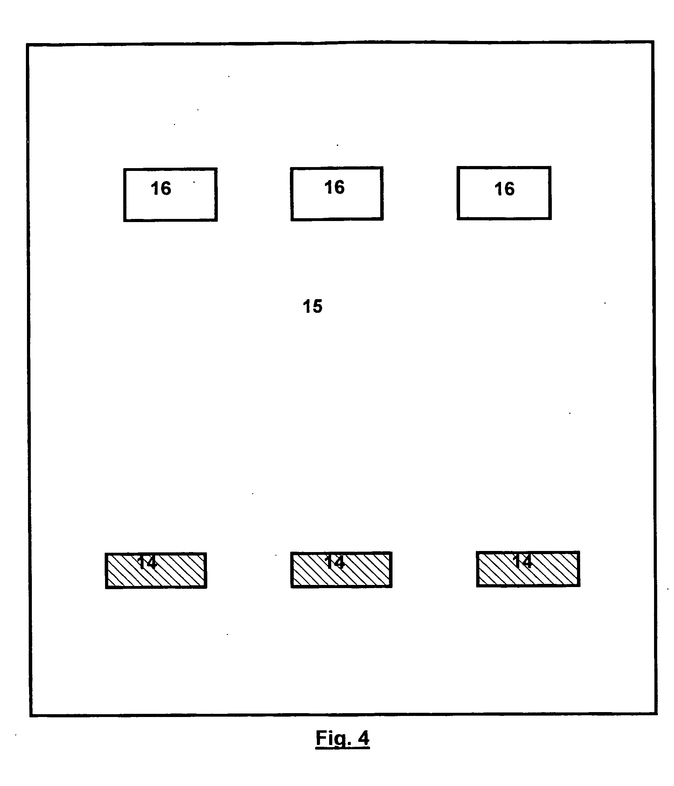

It should be understood that the invention is not limited to the design shown in Figures 1-4. The figures are merely presented to exemplify the invention by one possible configuration. With reference to Fig. 1 there is in a cross sectional view shown a reactor/electrolyser with an electrolysis chamber 2, one adjacent chamber 1, and a third chamber 13 for reduction of SiCl₄ by the Zn produced by the electrolysis. Figure 2 shows a top view of the same reactor/electrolyser in the level of the cathodes with the same numerical references. Figure 3 shows a cross section along walls 7 and 8, while Figure 4 shows a cross section along wall 15. In the Figures, reference numerals 3 and 4 are the anodes and cathodes, respectively. In the embodiment shown in the figures, the anodes 3 are inserted through the top being connected to respective electric supply connectors at the top (not further shown), while the cathodes 4 are inserted from the side and being similarly connected to electric supply connectors from the side (neither not shown). It should be understood that the opposite configuration is equally possible, as are configurations with only top inserted electrodes, only side-inserted electrodes, or configurations with bottom-inserted electrodes. For bottom or side inserted electrodes, proper cooling of the electrode head is important to avoid electrolyte leakage from the cell. Bipolar electrode configurations are also possible. In that case, only the mono polar cathode(s) and anode(s) need to be inserted into the cell. Bipolar electrodes also allow for inclination of the electrodes and inclination to nearly horizontal electrode configuration is possible. When using inclined electrodes, chlorine is produced on the electrode surface facing downwards, and Zn on the surface facing upwards.

As Zn is produced, it will, due to its higher density, initially as indicated by numeral 5 be collected on the bottom of the cell in chambers 1 and 2 and then flow through holes 14 in a partition wall 15 down to the bottom of chamber 13. At the upper part of chamber 2 an outlet 6 is provided to collect and evacuate the chlorine being produced under the electrolysis of ZnCl₂. Openings 9 at the top of the reactor/cell can be used for the addition of electrolyte components, removal of electrolyte, and inspection of the cell. An opening 10 provided on top of the reduction chamber 13 is mainly used for removal of produced Si 11, but can also be used for addition of Zn if required, as well as addition or removal of other materials and inspection. Reference numerals 7 and 8 are indicating partition walls (in cross sectional view) separating the electrolysis chamber 2 from the middle chamber 1, while reference numeral 15 shows the wall separating the middle chamber from the SiCl₄ reduction chamber. The purpose of the middle chamber 1 is to ensure proper circulation of electrolyte in the electrolysis chamber 2. The chlorine bubbles released on the anode will create an upward flow of electrolyte between the anodes and the cathodes. An opening 19 between the partition walls 7 and 8 allows for a downward flow of electrolyte in chamber 2, thereby creating a circular flow of electrolyte around wall 7 as indicated by the arrow. Such a flow is advantageous for the performance of the ZnCl₂ electrolysis. In chamber 13, reduction of SiCl₄ takes place by bubbling SiCl₄ through the liquid Zn pool 5. SiCl₄ may be fed as a gas or a liquid that will evaporate during feeding. Liquid Zn metal is, as stated above, entering chamber 13 through the holes 14 in wall the16 and is thereby continuously supplied from the electrolysis chamber 1 to the reduction chamber 13. SiCl₄ is added through tube 12. The tube 12 may have any shape ensuring maximum reaction between SiCl₄ and Zn. One or several tubes, spinning gas dispersers, or manifold designs represent possible examples of solutions to ensure effective distribution of SiCl₄ to the liquid Zn 20 at the bottom of chamber 13. The Si resulting from the reaction between Zn and SiCl₄ is during the process collected as a layer 21 between the electrolyte and the Zn. Typically, the Si layer consists of a mixture of Si and Zn, which can be removed either by pumping or mechanically by grabbing at regular intervals or continuously. The other products from the reaction between SiCl₄ and Zn, ZnCl₂, dissolves in the electrolyte and is transported by circulation to chamber 1 through the holes 16. From chamber 1 the ZnCl₂ will flow with the electrolyte to chamber 2 where electrolysis of the ZnCl₂ to Zn and Cl₂ takes place.

Figure 3 shows a side view section through partition walls 7 and 8 with the same numerical references as Figs. 1 and 2. By sufficient immersion of the partition wall 8, separation of the atmosphere in chamber 2 is achieved. The electrolysis chamber then contains mainly chlorine, while the adjacent chambers contains mainly air or a suitable inert gas. The partition wall 7 will assist the generation of circulation of the electrolyte flow indicated by the arrow in Fig. 1. The velocity of the electrolyte can be controlled by adjustment of the gap between the walls 7 and 8, and/or the gap between the wall 7 and the bottom of the cell. With reference to Fig. 3, reference numerals 17 and 18 indicate support pillars for the upper and lower partition walls.

Figure 4 shows a cross section through the wall 15 between chamber 1 and 13. Holes 16 enable flow of electrolyte between chambers 1 and 13, and holes 14 enable Zn to flow between the same chambers.

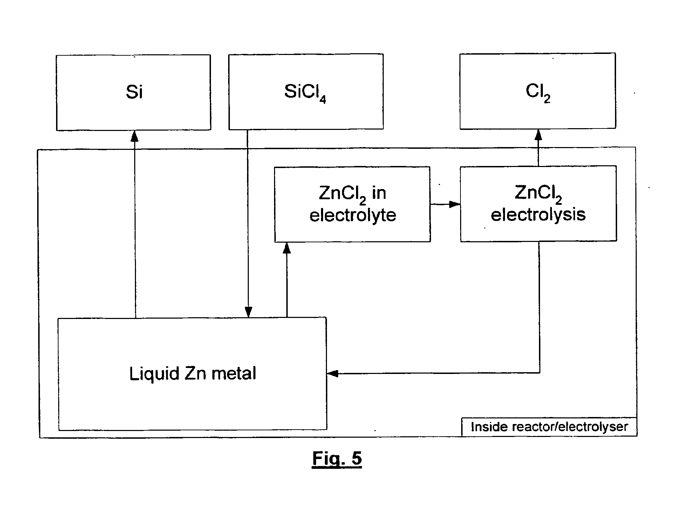

Figure 5 shows schematically a process sheet of the method according to the invention. As stated above the present invention represent a vast improvement of the previously known methods in that the reduction reaction is completely shifted to the right of the reaction:SiCl₄ + 2Zn = Si + 2ZnCl₂, whereby the handling of Zn and ZnCl₂ is minimised. This is accomplished by conducting electrolysis of ZnCl₂ and reduction of SiCl₄ in a combined, simultaneous process in the same equipment, as is illustrated in the Fig. 5. SiCl₄ reacts with liquid Zn metal whereby Si and ZnCl₂ is produced. ZnCl₂ is in turn circulated to the electrolysis part of the equipment and is conformed to Zn metal which sinks to the bottom of the cell and Cl₂ which suitably is collected and possibly purified and re-used for instance in a process for producing Si Cl₄ (not shown in Fig. 5). In such a reactor/electrolyser, ZnCl₂ is electrolysed to Zn and Cl₂. The chlorine is leaving the reactor/electrolyser as a gas, while the molten Zn metal sinks to the bottom. By a proper design of the reactor/electrolyser, SiCl₄ can be added directly to the Zn pool inside the reactor/electrolyser where it is reduced to Si metal. The ZnCl₂ produced during the reduction will dissolve in the electrolyte and is available for electrolysis. The Si produced in the reactor/electrolyser is removed either continuously or at regular intervals. The chlorine leaving the reactor/electrolyser can e.g. be used for production of SiCl₄ by direct chlorination of impure silicon metal, direct carbochlorination of silica, or for synthesis of HCl that can also be used for chlorination of impure silicon metal.

In the combined reactor/electrolyser, several material choices can be made. Since the purpose of the invention is to produce high purity silicon, materials that do not generate too high contamination of the Si must be used. The anode may preferably be a carbon material. Graphite is preferred due to its relatively low electrical resistance and its low reactivity towards chlorine. The cathode is also preferably a carbon material, but other electronically conductive materials are not excluded.

The reactor/electrolyser itself can be made from a steel shell lined with suitable brickwork, e.g. alumina based, silica based, carbon materials, silicon nitride based, silicon carbide based, aluminium nitride based, or combinations of these. It is preferred that the materials in direct contact with the electrolyte or the metal are silicon based, i.e. silica, silicon nitride, silicon carbide, or combinations of these. Carbon may also be used where high electrical conductivity is not a problem (e.g. the chamber 13). The same materials may also be used in a reactor without an electrolyser.

The electrolyte must contain ZnCl₂. The ZnCl₂ should preferably be free from moisture, oxides and hydroxides, but some contaminations can be accepted. In addition, it is preferable to use one or more other chlorides to increase electrical conductivity, reduce the viscosity, hygroscopicity, and the vapour pressure of ZnCl₂. Typical chlorides that may be added are LiCl, NaCl and KCl, but also alkali earth chlorides such as CaCl₂ and other alkali chlorides can be used. The ZnCl₂ concentration can range from a few weight percent up to 80 w%. The temperature of the electrolysis can range from the melting point of Zn (420°C) to its boiling point.

Operation of the reactor/electrolyser is rather straightforward. Before the first start-up, it is necessary to add electrolyte and Zn metal to the cell to the desired levels. The electrolysis is preferably run continuously. The SiCl₄ reduction can be run batch-wise or continuously. It is, however, important to ensure a sufficiently stable ZnCl₂ concentration in the electrolyte and Zn metal level in the reactor/electrolyser, and this limits the time between SiCl₄ additions if run in a batch mode. The silicon metal produced is removed at regular intervals. The levels of the Si and electrolyte in the reactor/electrolyser determine the maximum time between Si removals. There will be some Zn and electrolyte removed with the Si. These should preferably be recovered by e.g. distillation of the Si. Both Zn and electrolyte components are much more volatile than Si. The recovered electrolyte and Zn can be returned to the reactor/electrolyser. From time to time, it may be necessary to add or remove Zn and electrolyte from the reactor/electrolyser to account for losses or build-up of such materials. At all time it should be ensured that added materials have the sufficient purity to avoid contamination of the Si produced.

## Claims

1. A method for production of high purity silicon (Si) metal from reduction of silicon tetrachloride (SiCl₄) by zinc metal (Zn) in liquid state,
**characterised in that**
the Zn reduction of SiCl₄ and the production of Zn by electrolysis of ZnCl₂ take place in a common, combined reactor and electrolysis cell using preferably a molten salt as electrolyte

2. A method according to claim 1
**characterised in that**
SiCl₄ is fed to the liquid Zn in the combined reactor and electrolysis cell in a continuous or semi-continuous manner as a gas or as a liquid.

3. A method according to claims 1 and 2
**characterised in that**
SiCl₄ is fed to the liquid Zn through one or several lances.

4. A method according to claims 1 and 2
**characterised in that**
SiCl₄ is fed to the liquid Zn through a spinning gas disperser.

5. A method according to claims 1 and 2
**characterised in that**
SiCl₄ is fed to the liquid Zn through a manifold with several gas exit holes.

6. A method according to claims 1-5
**characterised in that**
the produced Si is removed from the cell by means of pumping..

7. A method according to claims 1-5
**characterised in that**
the produced Si is removed mechanically from the cell by means of a grabbing device.

8. A method according to claims 1-7
**characterised in that**
the operating temperature lies between the melting and boiling point of Zn

9. A method according to claims 1-8
**characterised in that**
ZnCl₂ is dissolved in the molten salt comprising any of the alkali halides, any of the alkali earth halides, or a mixture thereof.

10. A method according to claims 1-9
**characterised in that**
the chlorine produced by the electrolysis of ZnCl₂ is purified to be reused for the production of SiCl₄.

11. Equipment for production of high purity silicon (Si) metal from reduction of silicon tetrachloride (SiCl₄) by zinc metal
**characterised in that**
the Zn reduction of SiCl₄ and the production of Zn by electrolysis of ZnCl₂ take place in a common, combined reactor and electrolysis cell using a molten salt as electrolyte, where the reactor and electrolysis cell are provided in a common housing which is divided into two or more communicating compartments (13,1, 2) by a first or more partition walls (15, 8, 7), where the electrolysis of ZnCl₂ by means of electrodes (3, 4) is taking place in at least one compartment (1, 2) and the Zn reduction of SiCl₄ takes place in at least one other compartment (13), and where Zn metal flows between the chamber/s (1,2) of the ZnCl₂ electrolysis to the chamber/s (13) of SiCl₄ reduction, and where the electrolyte circulates between the chamber/s of ZnCl₂ electrolysis and the chamber/s of SiCl₄ reduction, and where the atmosphere in the chamber/s where electrolysis take place are separated from the atmosphere in the other chambers by the first partition wall (15).

12. Equipment according to claim 11
**characterised in that**
the electrolysis is performed by means of at least two monopolar electrodes.

13. Equipment according to claims 11-12
**characterised in that**
the electrolysis is carried out using at least two monopolar electrodes and one or more bipolar electrodes.

14. Equipment according to claims 11-13,
**characterised in that**
the monopolar electrodes are cooled by a cooling medium such as water.

15. Equipment according to claims 11-14,
**characterised in that**
the electrodes are based upon a graphitic material.

16. Equipment according to claims 11-15,
**characterised in that**
the material in the reactor's and/or electrolyser's lining is containing SiO₂

17. Equipment according to claims 11-16,
**characterised in that**
the material in the reactor's and/or electrolyser's lining is contains silicon nitride

18. Equipment according to claims 11-17,
**characterised in that**
the material in the reactor's and/or electrolyser's lining is contains silicon carbide

## Patentansprüche

1. Verfahren zur Herstellung eines hochreinen Silicium-(Si-) Metalls aus der Reduktion von Siliciumtetrachlorid (SiCl₄) durch Zinkmetall (Zn) im flüssigen Zustand,
**dadurch gekennzeichnet, dass**
die Zn-Reduktion von SiCl₄ und die Herstellung von Zn durch Elekterolyse von ZnCl₂ in einer gemeinsamen, kombinierten Reaktor- und Elektrolysezelle bevorzugt unter Anwendung eines geschmolzenen Salzes als Elektrolyt erfolgen

2. Verfahren nach Anspruch 1,
**dadurch gekennzeichnet, dass**
SiCl₄ dem flüssigen Zn in der kombinierten Reaktor-und Elektrolysezelle auf kontinuierliche oder halbkontinuierliche Weise als Gas oder als Flüssigkeit zugespeist wird.

3. Verfahren nach den Ansprüchen 1 und 2,
**dadurch gekennzeichnet, dass**
SiCl₄ dem flüssigen Zn durch eine oder mehrere Lanzen zugespeist wird.

4. Verfahren nach den Ansprüchen 1 und 2,
**dadurch gekennzeichnet, dass**
SiCl₄ dem flüssigen Zn durch einen rotierenden Gasspender zugespeist wird.

5. Verfahren nach den Ansprüchen 1 und 2,
**dadurch gekennzeichnet, dass**
SiC1₄ dem flüssigen Zn durch einen Verteiler mit mehreren Gasauslasslöchern zugespeist wird.

6. Verfahren nach den Ansprüchen 1 - 5,
**dadurch gekennzeichnet, dass**
das hergestellte Si aus der Zelle durch Pumpen entfernt wird.

7. Verfahren nach den Ansprüchen 1 - 5,
**dadurch gekennzeichnet, dass**
das hergestellte Si aus der Zelle mechanisch mit Hilfe eines Greifgeräts entfernt wird.

8. Verfahren nach den Ansprüchen 1 - 7,
**dadurch gekennzeichnet, dass**
die Betriebstemperatur zwischen dem Schmelz- und dem Siedepunkt von Zn liegt.

9. Verfahren nach den Ansprüchen 1 - 8,
**dadurch gekennzeichnet, dass**
ZnCl₂ in dem geschmolzenen Salz, das irgendeines von den Alkalihalogeniden, irgendeines von den Erdalkalihalogeniden oder eine Mischung davon umfasst, gelöst wird.

10. Verfahren nach den Ansprüchen 1 - 9,
**dadurch gekennzeichnet, dass**
das durch die Elektrolyse von ZnCl₂ hergestellte Chlor gereinigt wird, um für die Herstellung von SiCl₄ wiederverwendet zu werden.

11. Vorrichtung zur Herstellung von hochreinem Silicium-(Si-) Metall aus der Reduktion von Siliciumtetrachlorid (SiCl₄) durch Zinkmetall
**dadurch gekennzeichnet, dass**
die Zn-Reduktion von SiCl₄ und die Herstellung von Zn durch Elekterolyse von ZnCl₂ in einer gemeinsamen, kombinierten Reaktor- und Elektrolysezelle unter Anwendung eines geschmolzenen Salzes als Elektrolyt erfolgt, wobei die Reaktor- und Elektrolysezelle mit einem gemeinsamen Gehäuse versehen sind, das in zwei oder mehrere kommunizierende Kompartimente (13, 1, 2) durch eine erste oder mehrere Trennwände (15, 8, 7) geteilt ist, wobei die Elektrolyse von ZnCl₂ durch Elektroden (3, 4) in mindestens einem Kompartiment (1, 2) stattfindet und die Zn-Reduktion von SiCl₄ in mindestens einem anderen Kompartiment (13) stattfindet und wobei Zn-Metall zwischen der Kammer/den Kammern (1, 2) der ZnCl₂-Elektrolyse zu der Kammer/den Kammern (13) der SiCl₄-Reduktion strömt und wobei der Elektrolyt zwischen der Kammer/den Kammern der ZnCl₂-Elektrolyse und der Kammer/den Kammern der SiCl₄-Reduktion zirkuliert und wobei die Atmosphäre in der Kammer/den Kammern, wo die Elektrolyse stattfindet, von der Atmosphäre in den anderen Kammern durch die erste Trennwand (15) getrennt ist.

12. Vorrichtung nach Anspruch 11,
**dadurch gekennzeichnet, dass**
die Elektrolyse durch mindestens zwei monopolare Elektroden durchgeführt wird.

13. Vorrichtung nach den Ansprüchen 11 - 12,
**dadurch gekennzeichnet, dass**
die Elektrolyse unter Anwendung von mindestens zwei monopolaren Elektroden und einer oder mehreren bipolaren Elektroden durchgeführt wird.

14. Vorrichtung nach den Ansprüchen 11 - 13,
**dadurch gekennzeichnet, dass**
die monopolaren Elektroden durch ein Kühlmedium wie Wasser gekühlt werden.

15. Vorrichtung nach den Ansprüchen 11 - 14,
**dadurch gekennzeichnet, dass**
die Elektroden auf einem graphitischen Material basieren.

16. Vorrichtung nach den Ansprüchen 11 - 15,
**dadurch gekennzeichnet, dass**
das Material in der Auskleidung des Reaktors und/oder des Elektrolyseurs SiO₂ enthält.

17. Vorrichtung nach den Ansprüchen 11 - 16,
**dadurch gekennzeichnet, dass**
das Material in der Auskleidung des Reaktors und/oder des Elektrolyseurs Siliciumnitrid enthält.

18. Vorrichtung nach den Ansprüchen 11 - 17,
**dadurch gekennzeichnet, dass**
das Material in der Auskleidung des Reaktors und/oder des Elektrolyseurs Siliciumcarbid enthält.

## Revendications

1. Procédé de production de silicium (Si) métallique de grande pureté à partir de la réduction de tétrachlorure de silicium (SiCl₄) par du zinc (Zn) métallique à l'état liquide,
**caractérisé en ce que**
la réduction par Zn de SiCl₄ et la production de Zn par électrolyse de ZnCl₂ ont lieu dans un réacteur et une cellule d'électrolyse combinés communs en utilisant de préférence un sel fondu en tant qu'électrolyte.

2. Procédé selon la revendication 1,
**caractérisé en ce que**
le SiCl₄ est alimenté au Zn liquide dans le réacteur et la cellule d'électrolyse combinés communs de manière continue ou semi-continue sous la forme d'un gaz ou sous la forme d'un liquide.

3. Procédé selon les revendications 1 et 2,
**caractérisé en ce que**
le SiCl₄ est alimenté au Zn liquide par le biais d'un ou plusieurs tubes.

4. Procédé selon les revendications 1 et 2,
**caractérisé en ce que**
le SiCl₄ est alimenté au Zn liquide par le biais d'un distributeur de gaz rotatif.

5. Procédé selon les revendications 1 et 2,
**caractérisé en ce que**
le SiCl₄ est alimenté au Zn liquide par le biais d'un distributeur comprenant plusieurs orifices de sortie de gaz.

6. Procédé selon les revendications 1 à 5,
**caractérisé en ce que**
le Si produit est enlevé de la cellule par pompage.

7. Procédé selon les revendications 1 à 5,
**caractérisé en ce que**
le Si produit est éliminé mécaniquement de la cellule au moyen d'un dispositif de creusement.

8. Procédé selon les revendications 1 à 7,
**caractérisé en ce que**
la température d'exploitation est comprise entre la température de fusion et la température d'ébullition de Zn.

9. Procédé selon les revendications 1 à 8,
**caractérisé en ce que**
le ZnCl₂ est dissous dans le sel fondu comprenant n'importe quels halogénures alcalins, n'importe quels halogénures alcalino-terreux, ou des mélanges de ceux-ci.

10. Procédé selon les revendications 1 à 9,
**caractérisé en ce que**
le chlore produit par l'électrolyse de ZnCl₂ est purifié afin d'être réutilisé pour la production de SiCl₄.

11. Équipement pour la production de silicium (Si) métallique de grande pureté à partir de la réduction de tétrachlorure de silicium (SiCl₄) par du zinc (Zn) métallique,
**caractérisé en ce que** la réduction par Zn de SiCl₄ et la production de Zn par électrolyse de ZnCl₂ ont lieu dans un réacteur et une cellule d'électrolyse combinés communs en utilisant un sel fondu en tant qu'électrolyte, le réacteur et la cellule d'électrolyse étant situés dans un boîtier commun qui est divisé en deux compartiments communicants ou plus (13, 1, 2) par une premiere ou plusieurs parois de séparation (15, 8, 7), l'électrolyse de ZnCl₂ au moyen d'électrodes (3, 4) ayant lieu dans au moins un compartiment (1, 2) et la réduction par Zn de SiCl₄ ayant lieu dans au moins un autre compartiment (13), et le Zn métallique s'écoulant de la ou des chambres (1, 2) de l'électrolyse de ZnCl₂ vers la ou les chambres (13) de réduction de SiCl₄, et l'électrolyte circulant entre la ou des chambres (1, 2) de l'électrolyse de ZnCl₂ et la ou les chambres de réduction de SiCl₄, et l'atmosphère dans la ou les chambres dans lesquelles l'électrolyse a lieu étant séparée de l'atmosphère dans les autres chambres par la première paroi de séparation (15).

12. Équipement selon la revendication 11,
**caractérisé en ce que**
l'électrolyse est réalisée au moyen d'au moins deux électrodes monopolaires.

13. Équipement selon les revendications 11 et 12,
**caractérisé en ce que**
l'électrolyse est réalisée en utilisant au moins deux électrodes monopolaires et une ou plusieurs électrodes bipolaires.

14. Équipement selon les revendications 11 à 13,
**caractérisé en ce que**
les électrodes monopolaires sont refroidies par un moyen de refroidissement tel que de l'eau.

15. Équipement selon les revendications 11 à 14,
**caractérisé en ce que**
les électrodes sont à base d'un matériau graphitique.

16. Équipement selon les revendications 11 à 15,
**caractérisé en ce que**
le matériau du revêtement intérieur du réacteur et/ou de l'électrolyseur contient du SiO₂.

17. Équipement selon les revendications 11 à 16,
**caractérisé en ce que**
le matériau du revêtement intérieur du réacteur et/ou de l'électrolyseur contient du nitrure de silicium.

18. Équipement selon les revendications 11 à 17,
**caractérisé en ce que**
le matériau du revêtement intérieur du réacteur et/ou de l'électrolyseur contient du carbure de silicium.
